# FASCICULE DE BREVET EUROPEEN

(11) **EP 0 498 151 B1**
(45) Date de publication et mention de la délivrance du brevet: **29.11.1995**
(21) Numéro de dépôt: 92100136.8
(22) Date de dépôt: 07.01.1992
(51) Int. Cl.: H01R 9/24, H01T 4/06

(54) **Réglette de raccordement à protections semi-intégrées**
Anschlussleiste mit halbintegriertem Schutz
Terminal block with semi-integrated protections

(30) Priorité: 10.01.1991 FR 9100231
(43) Date de publication de la demande: 12.08.1992
(73) Titulaire: ALCATEL CABLE INTERFACE, 08330 Vrigne aux Bois (FR)
(72) Inventeur: Lejuste, Maurice, F-08330 Vrigne aux Bois (FR); Michaux, François, F-08200 Sedan (FR)
(74) Mandataire: Weinmiller, Jürgen

(56) Documents cités:
- DE-C- 3 813 889
- DE-U- 9 001 687
- GB-A- 2 048 580
- US-A- 4 449 156
- US-A- 4 972 576

## Description

La présente invention est du domaine des télécommunications. Elle porte sur une réglette de raccordement de lignes téléphoniques.

Elle est utilisée pour des raccordements, en particulier entre les paires de conducteurs d'un câble de distribution et les paires de conducteurs de lignes d'abonné. Elle permet si nécessaire, la protection de l'ensemble ou d'une partie de ces racccordements contre des surtensions d'origines diverses possibles et notamment coup de foudre ou autres phénomènes.

De telles réglettes sont déjà en tant que telles connues.

Le document FR-A-2 526 592 notamment décrit une réglette de ce type. Cette réglette comporte un ou des blocs identiques dits de connexion montés sur un support et un boîtier dit de protection associé à chaque bloc de connexion à protéger. Ce bloc de protection est disposé à côté du bloc de connexion concerné, sur sa longueur.

Dans cette réglette connue, le bloc de connexion a au moins deux rangées d'éléments de connexion selon sa longueur. Au moins l'une de ces rangées est le long de sa face en regard du support et une autre au moins le long de sa face opposée. Des moyens internes au bloc de connexion assurent le raccordement des contacts de même rang dans les rangées.

Dans cette même réglette connue le bloc de protection comporte un alignement d'éléments de protection tels que des parafoudres. Ces parafoudres sont bipolaires et ont chacun une patte ou borne de ligne et une patte ou borne de masse.

Le bloc de protection a au moins une rangée d'éléments de connexion qui sont raccordés aux bornes de lignes des parafoudres respectifs et sont accessibles pour leur raccordement aux éléments de connexion de l'une des rangées du bloc de connexion. Les bornes de masse de ces parafoudres sont reliées individuellement à une barre de masse.

Des moyens de raccordement sont prévus entre le bloc de protection et le bloc de connexion. Ce sont des fils conducteurs raccordés aux éléments de connexion de l'une des rangées de chacun de ces blocs ou des conducteurs en U raccordés aux moyens internes de connexion du bloc de connexion et aux bornes de lignes dans le bloc de protection. Ces derniers conducteurs en U peuvent eux-mêmes être montés dans un boîtier rapporté sur le support et recevant le bloc de connexion et le bloc de protection.

La réglette résultante est relativement complexe et surtout présente des difficultés d'exploitation, ainsi que de permettre une plus grande fiabilité des raccordements réalisés.

La présente invention a pour but de permettre une séparation des conducteurs entrants et sortants, avec avantageusement une disposition de tous les points de raccordement tant pour ces conducteurs que pour leurs protections sur une même face dite frontale, pour une grande facilité d'exploitation, ainsi que de permettre une plus grande fiabilité des raccordements réalisés.

Elle a en outre pour but de permettre une meilleure protection par utilisation de préférence d'éléments de protection ou parafoudres tripolaires.

Elle a pour objet une réglette de raccordement à protections semi-intégrées, pour lignes de transmission définies par des paires de conducteurs entrants raccordées à des paires de conducteurs sortants, comportant :
- un bloc de connexion,
- une première et une deuxième rangée d'éléments de connexion montés dans ledit bloc de connexion et affectés auxdits conducteurs entrants et auxdits conducteurs sortants, selon la rangée considérée, avec les éléments de connexion de même rang dans lesdites première et deuxième rangées raccordés l'un à l'autre dans ledit bloc de connexion et accessibles sur une face dite frontale dudit bloc de connexion,
- une barette de protection rapportée contre la face frontale du bloc de connexion et portant des éléments individuels de protection, dits parafoudres, pour lesdites lignes,
- une troisième rangée d'éléments de connexion montés dans ledit bloc de connexion et affectés au raccordement des parafoudres en parallèle sur lesdites lignes, avec les éléments de connexion de ladite troisième rangée raccordés individuellement, au moins pour une partie d'entre eux, dans le bloc de connexion aux éléments de connexion desdites première et deuxième rangées et accessibles sur ladite face frontale du bloc de connexion,
- et une quatrième rangée d'éléments de connexion, accessibles sur une face dite arrière de ladite barrette et raccordés individuellement dans ladite barrette au moins à des électrodes dites de ligne des parafoudres, les éléments de connexion de ladite quatrième rangée venant directement se raccorder aux éléments de connexion de ladite troisième rangée,

caractérisée en ce que lesdites troisième et quatrième rangées comportent l'une et l'autre des éléments de connexion de masse, avec les éléments de connexion de masse de ladite quatrième rangée raccordés à des électrodes dites de masse des différentes parafoudres individuels, dans ladite barrette de protection, et les éléments de connexion de masse de ladite troisième rangée montés, en outre, saillants sur la face arrière opposée à ladite face frontale dudit bloc de connexion et raccordés à un moyen arrière de distribution de masse commune.

Elle présente en outre les caractéristiques suivantes prises isolément ou en combinaison :
- ladite barrette de protection comporte un chargeur de longueur sensiblement égale à celle dudit bloc de connexion prise selon lesdites rangées, dans lequel sont montés et retenus lesdits parafoudres, avec de préférence le chargeur ne recevant que les parafoudres des seules lignes à protéger,
- les parafoudres sont maintenus par un couvercle coulissant sur le chargeur compartimenté, ledit couvercle ne présentant avantageusement qu'une course limitée nécessaire pour la fermeture ou l'ouverture du chargeur,
- les parafoudres sont montés individuellement en coffret étanche divisé en deux compartiments, avec leurs seules pattes de contact accessibles dans l'un de ces compartiments,
- ces parafoudres sont tripolaires,
- le bloc de connexion présente en correspondance avec lesdites première, deuxième et troisième rangées d'éléments de connexion trois rangées de cheminées saillantes sur sa face frontale, dans lesquelles sont logés selon les rangées les éléments individuels de connexion,
- ce bloc a en outre deux cheminées terminales supplémentaires en bout de la troisième rangée de cheminées pour le montage et le maintien de la barrette de protection,

Les caractéristiques et avantages de la présente invention ressortiront de la description donnée ci-après en regard des dessins ci-annexés. Dans ces dessins :
- la figure 1 est une vue schématique en élévation et éclatée d'un exemple préféré de réalisation de la réglette selon la présente invention,
- la figure 2 est une vue de dessus d'un bloc dit de connexion de la réglette selon la figure 1,
- la figure 3 est une vue en coupe longitudinale du bloc de connexion, selon les flèches III-III de la figure 2,
- la figure 4 est une vue en coupe transversale du bloc de connexion, selon les flèches IV-IV de la figure 2,
- les figures 5 et 6 montrent deux des éléments de contact du bloc de connexion selon les figures 2 à 4,
- la figure 7 est une vue en coupe transversale d'un bloc de connexion selon une variante de réalisation,
- la figure 8 montre l'un des éléments de contact modifié du bloc de connexion selon la figure 7,
- la figure 9 est une vue schématique en élévation et éclatée d'une barrette de protection de la réglette selon la figure 1,
- la figure 10 est une vue en coupe d'un moyen de fermeture, dit couvercle, de la barrette de protection selon la figure 9,
- la figure 11 est une vue en coupe transversale de cette barrette de protection,
- les figures 12 et 13 sont deux vues de dessus d'un chargeur et du couvercle de la barrette de protection selon la figure 9,
- la figure 14 est une vue en coupe longitudinale de ladite barrette de protection,
- la figure 15 est une vue d'une demi-coquille d'un coffret de montage des éléments de protection dans le chargeur ou barrette figures 9 et 11,
- la figure 16 est une vue schématique d'une variante de réalisation de la barrette de protection précitée,
- la figure 17 est une vue en coupe d'une variante du coffret précité dans lequel est monté un parafoudre.

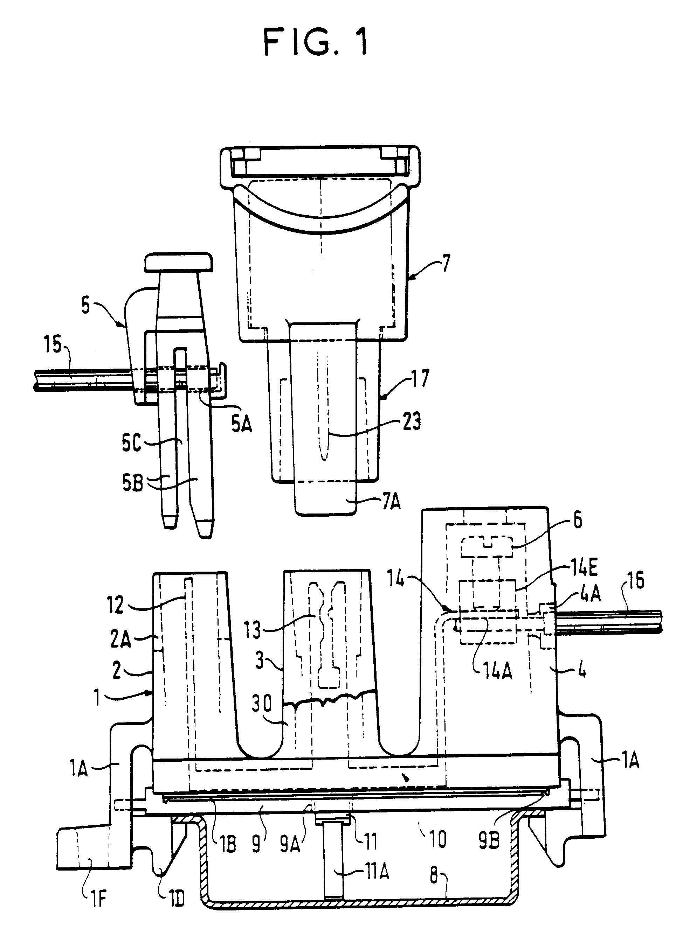

En regard de la figure 1, on voit que la réglette selon l'invention comporte essentiellement :
- un bloc dit de connexion 1, présentant sur l'une de ses faces dite frontale trois rangées longitudinales de cheminées individuelles 2, 3, et 4, dans lesquelles sont logés des éléments de connexion 12, 13 et 14 notamment, avec les deux rangées extérieures 2 et 4 et affectées aux raccordements de conducteurs entrants et sortants, respectivement, et la rangée centrale 3 à la protection des lignes résultantes,
- des moyens 5 de raccordement de conducteurs individuels dits entrants 15 aux éléments de connexion 12 des cheminées 2,
- des moyens 6 de raccordement de conducteurs individuels dits sortants 16 aux éléments de connexion 14 des cheminées 4,
- une barrette de protection 7 affectée à la rangée centrale de cheminées 3, dans laquelle sont montés des éléments individuels de protection, dits parafoudres, non visibles et désignés ci-après par la référence 20, pour les lignes ou paires de conducteurs entrants et sortants raccordées qui sont à protéger.

Ces parafoudres sont montés dans des coffrets individuels 17. Ils sont avantageusement choisis de type tripolaire dont on voit l'une seule des deux pattes de ligne 23, de part et d'autre d'une patte centrale de masse désignée ci-après sous la référence 21, ces pattes étant alignées en une rangée sur l'arrière de la barrette de protection.

Le bloc de raccordement 1 est monté sur un support métallique ou métallisé, tel qu'un rail support 8. Il présente à cet effet des pattes latérales de fixation 1A saillantes sur sa face arrière, pour son accrochage sur le rail. Une plaque arrière 9 de retenue des éléments de connexion est rapportée et maintenue en butée contre les pattes latérales de fixation 1A et est fixée de manière étanche, par ultrasons, sur sa face arrière. La face arrière du bloc et/ou cette plaque présentent des nervures en V, 1B ou 9B, ou directeurs d'énergie, pour cette fixation.

Les éléments de connexion 12 et 14 de même rang dans leurs rangées sont directement reliés entre eux et à un élément de connexion 13. Ils appartiennent à un même élément de contact 10, l'élément de connexion 13 venant latéralement dans la cheminée correspondante 3, cloisonnée ou divisée, ainsi qu'il sera précisé ci-après.

Un autre élément de connexion 11, à queue de connexion 11A saillante à l'arrière du bloc de connexion 1, est logé dans une partie centrale de chaque cheminée 3. Il est indépendant de l'élément de contact 10. Sa queue de connexion 11A vient, à travers une fenêtre 9A dans la plaque arrière 9, en contact sur le rail 8. Cet élément de connexion 11 est dit élément de masse.

Ce bloc de raccordement 1 ainsi équipé avec les moyens 5 et 6 de raccordement et la barrette de protection 7 constitue un module unitaire pour la constitution d'un ensemble de raccordement.

Dans cette figure 1 les cheminées 2 et 4 sont montrées légèrement différentes et équipées différemment. Les moyens de raccordement 5 et 6 sont alors, en correspondance, également de deux types différents.

Dans l'exemple illustré, l'élément de connexion 12 est une connexion autodénudante alors que l'élément de connexion 14 est une borne de connexion, à patte élastique de connexion 14A, appartenant à l'élément de contact 10, dans un étrier de connexion 14E monté dans la cheminée. Cette patte 14A est sollicitée par les moyens de raccordement 6 constitués par une vis. L'élément de connexion ou borne de connexion 14 reçoit l'extrémité dénudée du conducteur 16 par un trou 4A d'entrée dans la borne 14, prévu dans la paroi extérieure de chaque cheminée 4 sur la réglette.

Les moyens de raccordement 5 sont quant à eux constitués par des poussoirs individuels pour chaque cheminée 2, ou en variante des poussoirs doubles pour deux cheminées 2, d'insertion et de raccordement du conducteur 15 sans dénudage préalable. Le poussoir 5 est à trou 5A de réception et maintien du conducteur non dénudé à raccorder, prévu dans deux jambages 5B qu'il présente de part et d'autre d'une fente 5C.

Ces jambages guident le poussoir dans la cheminée 2 de part et d'autre de la connexion autodénudante 12 reçue dans la fente 5C, jusqu'à l'obtention du raccordement du conducteur 15 dans cette connexion autodénudante 12. Une fente 2A sur la paroi extérieure de la cheminée 2 et une autre sur sa paroi opposée sont prévues pour le poussoir équipé comme représenté mais non décrit en détail, car hors de la présente invention.

Bien entendu cette réglette peut avoir ses cheminées 2 et 4 qui sont toutes identiques les unes des autres, dans les deux rangées extérieures alors parfaitement symétriques. Les moyens de raccordement tels que 5 et 6 sont alors tous identiques les uns aux autres.

Le montage de la barrette de protection 7 sur cette rangée centrale de cheminées 3 est précisé en regard de cette figure 1 et des figures 2 et 3.

La barrette de protection 7 est amovible sur le bloc de connexion 1, ainsi qu'il ressort de sa représentation dans la figure 1. Elle présente sur ses petites faces latérales deux pattes terminales 7A largement saillantes sur sa face arrière, pour son centrage et son montage sur le bloc de connexion.

Le bloc de connexion présente quant à lui deux cheminées supplémentaires terminales 30 de réception de ces pattes 7A. Ces deux cheminées terminales 30 sont à l'une et l'autre des extrémités de la rangée centrale de cheminées 3.

Elles sont à canal intérieur 30A relativement étroit qui débouche en une plus large ouverture 30B sur la face arrière du bloc de connexion, pour l'accrochage élastique éventuel de la patte 7A correspondante. Le montage et le maintien de la barrette de protection est en outre complété par des dispositions prévues sur le coffret 17 pour chaque parafoudre ainsi qu'il sera vu ci-après.

En regard du montage du bloc de connexion 1 sur son rail 8 on note que le bloc de connexion 1 est simplement équipé d'un côté de deux pattes latérales d'encliquetage 1A et de l'autre opposé d'une seule patte d'encliquetage identique 1A.

Au moins l'une de ces pattes a une fenêtre 1F dans une excroissance latérale saillante extérieurement. Les pattes ont en outre chacune une dent 1D intérieure et saillante vers l'arrière, d'encliquetage et de rétention du bloc de connexion sur le rail. La ou les fenêtres précitées 1F sont utilisées pour la séparation du bloc sur le rail, réalisée à l'aide d'un levier extérieur qui y est engagé.

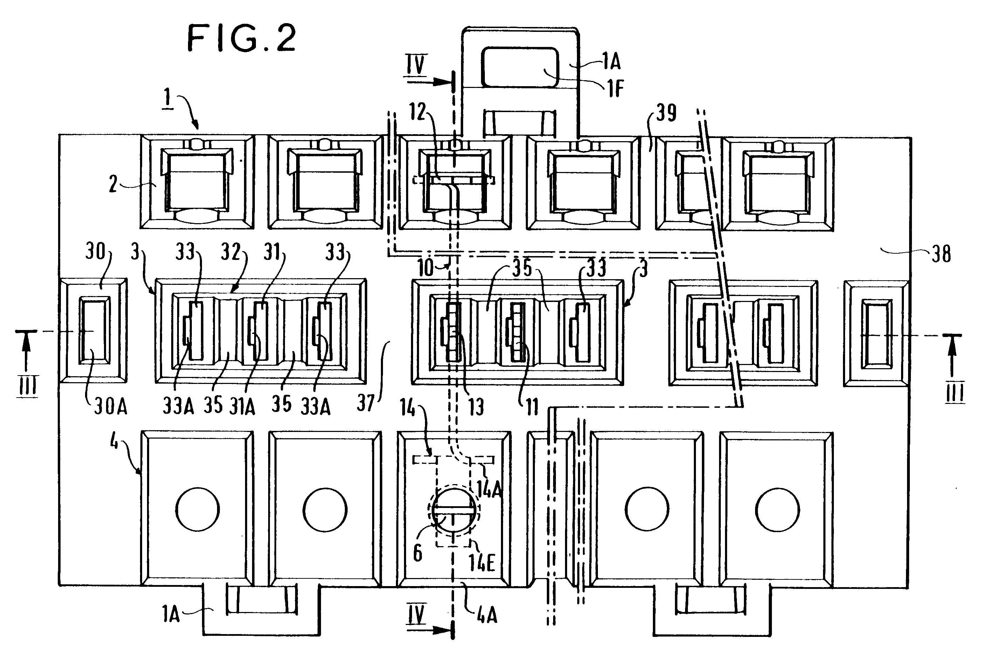

L'agencement des cheminées 3 de la rangée centrale, par rapport aux cheminées 2 et 4 des rangées extérieures, est décrit en se référant aux figures 2 à 4.

Chacune des cheminées 3 correspond aux deux cheminées 2 et aux deux cheminées 4 affectées au raccordement d'une ligne téléphonique, pour permettre à souhait la protection de cette ligne. Comme représenté dans une seule des cheminées 3, vue partiellement ou totalement équipée de ses éléments de connexion, chacune de ces cheminées 3 reçoit deux éléments de connexion 13 et un élément de connexion ou de masse 11, cet élément de masse 11 étant monté entre les deux précédents et isolés d'eux.

Les cheminées 3 sont cloisonnées intérieurement sur une partie de leur hauteur pour présenter trois canaux distincts et parallèles, transversaux à la rangée de cheminées 3 et notés 31 pour le canal central et 33 pour les deux autres dits latéraux. Ces trois canaux débouchent sur la face arrière du bloc de connexion 1 et dans une ouverture commune 32 de la face frontale. Ils sont de section globale rectangulaire, de grand axe transversal à la rangée de cheminées 3 et aux rangées de cheminées 2 et 4.

Chacun des canaux latéraux 33 est en regard de l'une des cheminées 2 et de la cheminée 4 de même rang, tandis que le canal central 31 est en regard de l'intervalle entre les deux cheminées 2 ou les deux cheminées 4 concernées par chaque cheminée 3.

Les deux éléments de connexion 13 sont maintenus dans les canaux 33 et l'élément de masse 11 dans le canal 31, leurs parties terminales étant saillantes dans l'ouverture commune 32. Une gorge 35, dans chaque cloison 36 entre les canaux 33 et 31, crée des lignes de fuites importantes entre ces canaux. Une encoche, notée 33A ou 31A selon le cas, sur une partie de la hauteur de l'une des parois de ces canaux, débouche dans l'ouverture 32 et forme à l'opposé une butée de retenue pour l'élément de connexion monté dans le canal. Cette butée est désignée par la même référence que l'encoche qui la définit.

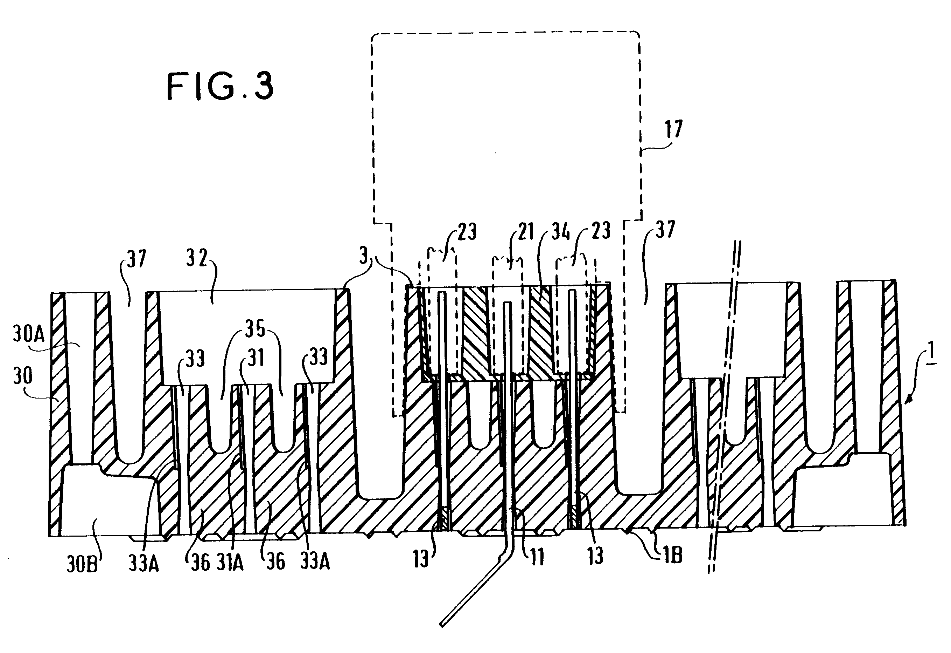

L'ouverture commune 32 reçoit en outre de préférence un capuchon en plastique 34, d'étanchéité et d'isolation, ainsi que montré uniquement dans la figure 3 et pour la seule cheminée 3 équipée, ce capuchon est alvéolé et vient recouvrir les parties terminales des éléments de connexion 13 et de masse 11 en permettant leur raccordement aux pattes de ligne 23 et de masse 21 de chaque parafoudre. En variante, elle peut être remplie de graisse isolante ou analogue.

Les cheminées 3 sont séparées les unes des autres, ainsi que des deux cheminées terminales 30 par des gorges profondes 37 dans la face frontale du bloc de connexion. De part et d'autre de la rangée de cheminées 3 deux gorges longitudinales profondes 38 la sépare des rangées de cheminées 2 et 4.

Les cheminées 2 ou 4 sont à canal unique non référencé, simplement aménagé pour la retenue de l'élément de connexion qui y est monté. Elles ne sont donc pas précisées davantage. Elles sont séparées les unes des autres par des gorges 39 dans la face frontale qui débouchent, comme les gorges 37 entre les cheminées 3, dans les gorges longitudinales 38.

En regard de la figure 3, on voit que deux éléments de connexion 13 et l'élément de masse 11 de chaque cheminée 3 reçoivent les deux pattes de lignes 23 et la patte de masse 21 saillantes à l'arrière de la barrette de protection 7 en place sur le bloc de connexion 1.

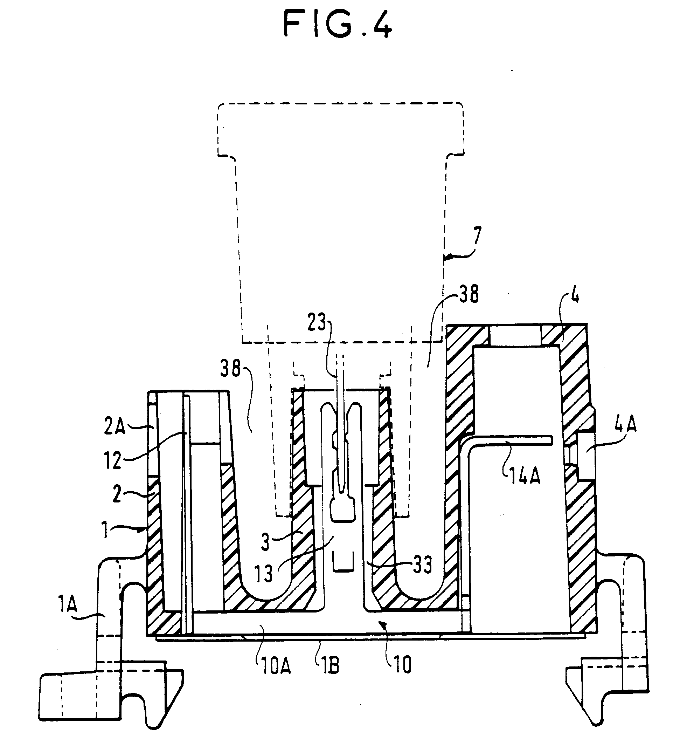

En regard de la figure 4, on voit clairement que l'élément de connexion 12 dans l'une des cheminées 2, la partie 14A de l'élément de connexion 14 dans la cheminée 4 de même rang et l'élément de connexion 13 dans l'un des canaux 33 de la cheminée 3 correspondante appartiennent au même élément de contact 10. Cet élément de contact 10 forme un pont de liaison 10A entre eux. Ce pont de liaison s'étend selon la largeur du bloc de connexion 1 sur sa face arrière. Il est encastré et maintenu dans la face arrière du bloc de connexion et retenu et protégé par la plaque arrière de retenue précitée.

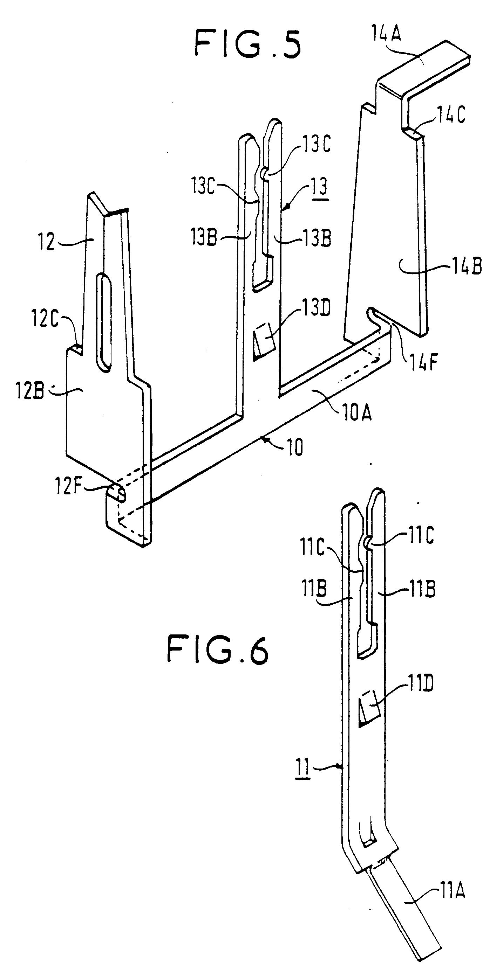

La figure 5 représente l'élément de contact 10 et la figure 6 l'élément de masse 11. Les éléments de connexion 12 et 14A sur l'élément de contact 10 correspondent aux cheminées 2 et 4 de type différent. Ils sont formés sur deux jambages 12B et 14B de l'élément de contact 10, qui sont parallèles et repliés en sens inverse, à l'une et l'autre des extrémités du pont de liaison 10A. Ces jambages sont plus larges que le pont et présentent une fente 12F ou 14F entre eux et le pont. La connexion autodénudante 12 forme la partie terminale du jambage 12B. Elle est du type fourche simple. Le jambage 12B présente deux épaulements latéraux 12C, pour sa retenue contre les parois de l'une ou l'autre des cheminées 2.

L'élément de connexion 14A est une patte élastique repliée en bout du jambage 14B. Ce jambage 14B présente aussi deux épaulements latéraux 14C pour sa retenue dans l'une ou l'autre des cheminées 4.

L'élément de connexion 13 est dans le plan du pont de liaison 10A et forme un T inversé avec ce pont. Comme l'élément de masse 11, décrit en même temps que lui, il est fendu en long pour présenter deux branches élastiques 13B ou 11B selon l'élément considéré. Chacune de ces branches a un bossage interne 13C ou 11C, saillant dans les fentes. Les deux bossages 13C ou 11C sont décalés légèrement l'un de l'autre le long de la fente de l'élément considéré, ils permettent une insertion aisée de la patte de ligne 23 ou de masse 21 du parafoudre et un bon contact électrique (figure 4). Une débouchure 13D ou 11D dans chaque élément de connexion 13 ou 11 permet sa retenue sur le fond de l'encoche latérale de son canal 33 ou 31 de chaque cheminée 3 (figure 3).

Alors que l'élément de connexion 13 appartient à l'élément de contact 10, l'élément de masse 11 est indépendant. Comme indiqué en regard de la figure 1, sa queue de connexion élastique 11A, le prolongeant et légèrement repliée sur lui, vient à travers l'une des fenêtres correspondante 9A de la plaque arrière de retenue faire frotteur de contact contre le rail.

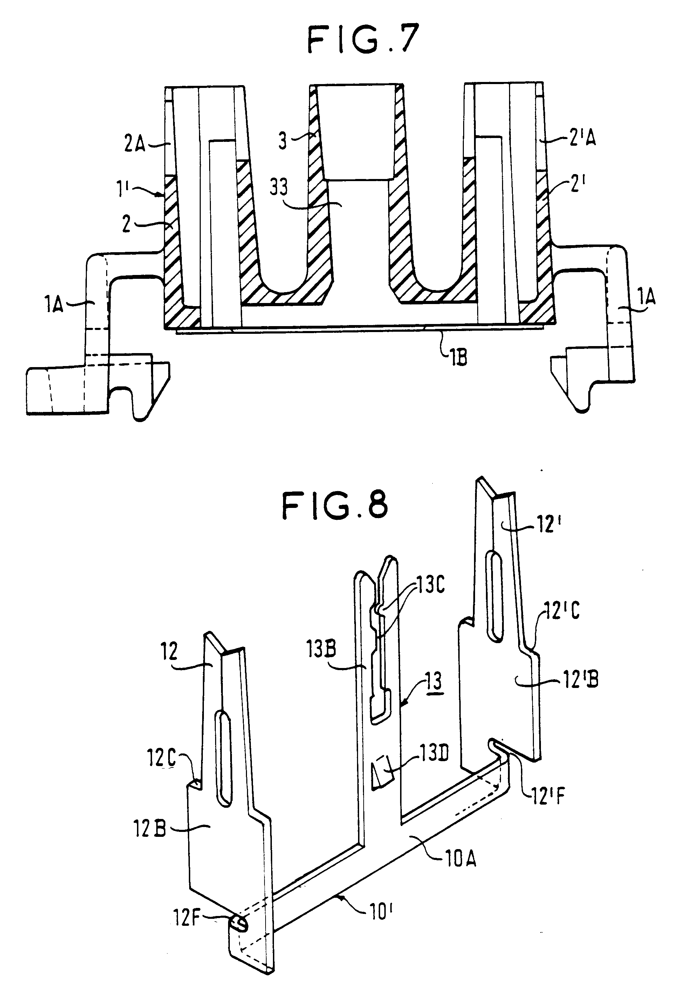

La figure 7 montre un bloc de connexion 1′ dont les deux rangées extérieures de cheminées sont identiques aux cheminées 2 précédentes et sont notées 2 et 2′; la figure 8 montre un élément de contact modifié en correspondance et noté 10′, dont les deux éléments latéraux de connexion 12 et 12′ sont rendus identiques pour les cheminées 2 et 2′ et l'élément de connexion 13 est inchangé pour la cheminée 3 ou plus précisément l'un de ses canaux 33. Sur ces figures 7 et 8, les parties portant les mêmes références numériques, avec et sans le signe "prime", sont identiques les unes aux autres et aux parties pareillement référencées dans les figures 4 et 5.

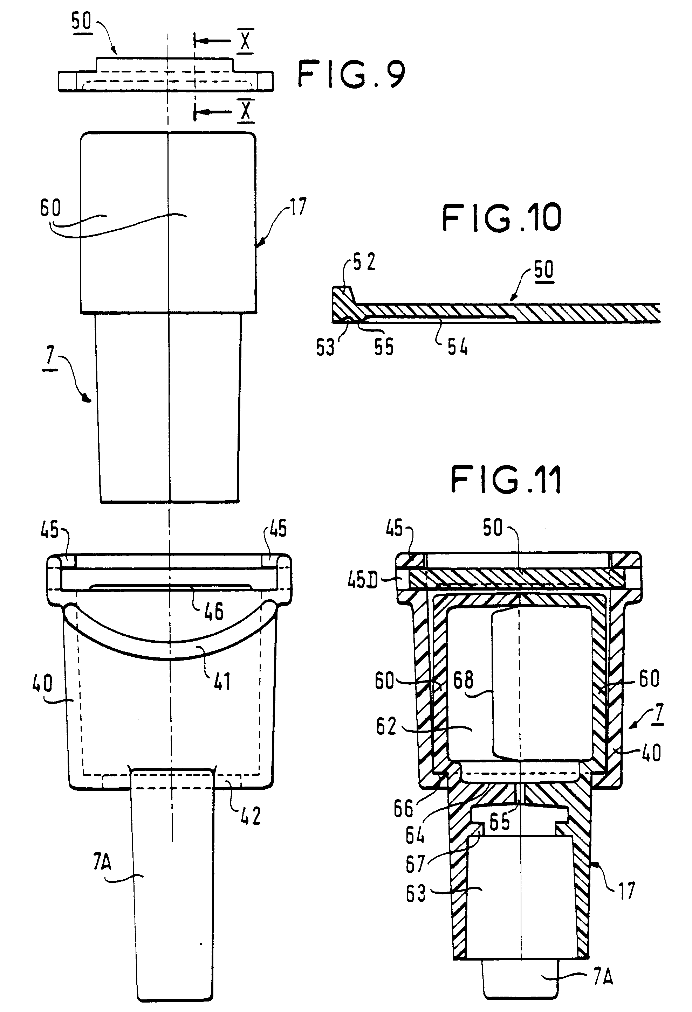

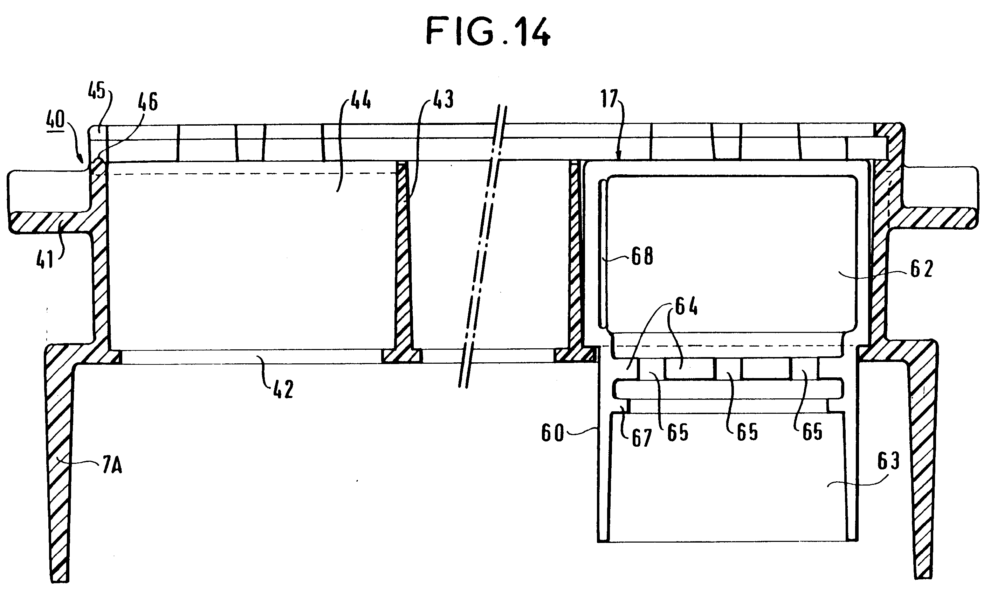

La barrette de protection 7 précitée est décrite en regard des figures 9 à 15.

Elle comporte un chargeur 40, de longueur correspondant à celle du bloc de connexion, les coffrets 17 pour chaque parafoudre interne et des moyens de retenue 50 formant couvercle sur le chargeur. Les coffrets 17 sont montés indépendamment les uns des autres dans le chargeur.

Le chargeur 40 est de section transversale en U. Ses deux petites faces latérales sont fermées. Les pattes 7A de montage de la barrette de protection sur le bloc de connexion sont formées sur lui. Le chargeur présente, en outre, sur ses deux petites faces latérales deux poignées de préhension 41 pour son montage sur le bloc de connexion et pour son retrait.

Le chargeur a une rangée de fenêtres 42 dans son fond, correspondant à la rangée centrale de cheminées du bloc de connexion, et est compartimenté sur sa longueur par des cloisons transversale 43. Il a ainsi autant de compartiments 44 que de cheminées 3, chacun ouvert par l'une des fenêtres 42 de son fond.

Les deux bords longitudinaux de l'ouverture avant du chargeur sont légèrement saillants extérieurement sur les deux grandes faces latérales de ce chargeur et sont repliés en vis-à-vis vers l'intérieur de l'ouverture. Ils forment une paire de glissières en U 45 pour le couvercle 50. Ces glissières sont ouvertes sur les petites faces latérales du chargeur.

Avantageusement, la branche supérieure de chacune des glissières 45 est crenelée et présente des encoches 45A et des dents 45B alternées. Chaque dent 45B est également montrée divisée en deux par une petite encoche 45C située en son milieu et centrée sur le compartiment 44 correspondant. A chaque encoche 45C correspond une petite fenêtre 45D dans le fond de chaque glissière.

Une nervure 46 de section semi-circulaire est prévue sur le bord de l'une des petites faces latérales du chargeur. Cette nervure sert au maintien en place du couvercle 50 sur le chargeur 40.

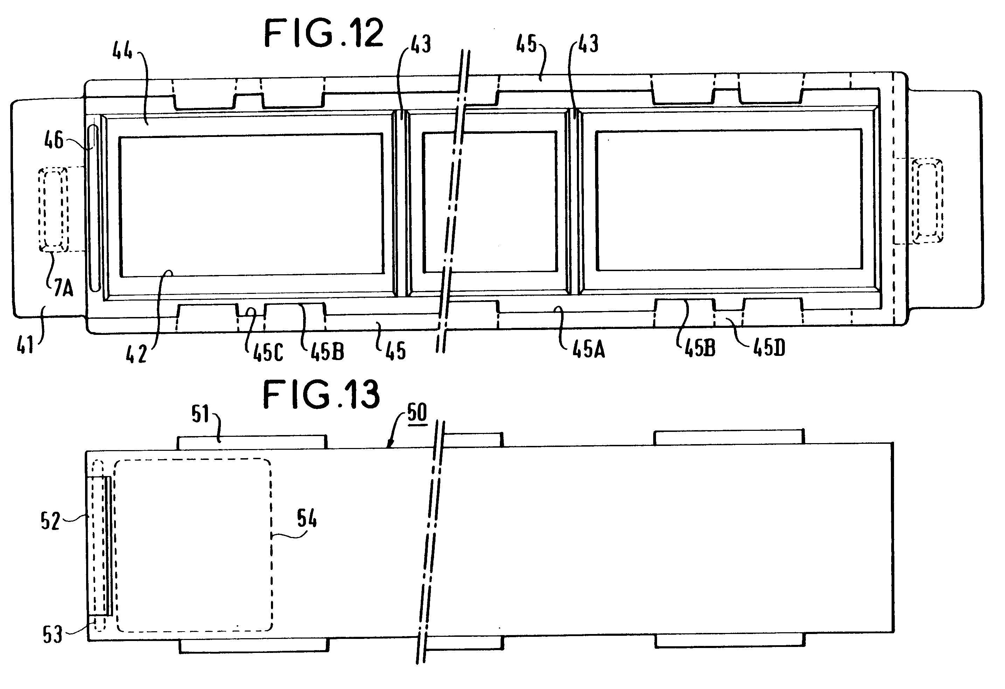

Ce couvercle 50 (Figures 10, 13) est constitué par une simple plaque coulissante sur le chargeur. Il est à dents 51 espacées les unes des autres le long de ses deux bords longitudinaux, de guidage du couvercle dans les glissières 45. Ces dents 51 assurent la retenue du couvercle sous les dents 45B des glissières 45 mais permettent le retrait du couvercle à travers les encoches 45A par coulissement du couvercle sur une très faible course et non plus sur la longueur totale du chargeur.

Pour son actionnement dans les glissières 45, l'un des petits bords du couvercle est rendue d'épaisseur plus importante et forme une tirette terminale 52 saillante sur sa face extérieure. Il a une rainure semi-circulaire 53 dans sa face intérieure, sous la tirette.

Cette rainure 53 reçoit la nervure 46 du chargeur pour le maintien fermé du couvercle sur le chargeur.

Il a en outre une empreinte 54 en creux dans sa face intérieure. Cette empreinte est proche de la rainure 53. Cette empreinte 54 reçoit la nervure 46 du chargeur lors du coulissement du couvercle, qui assure toujours le maintien des coffrets 17 dans le chargeur tant qu'il n'est pas retiré. Cette empreinte correspond à une course du couvercle sur une distance voisine de la moitié de la longueur d'un compartiment 44, pour laquelle le retrait du couvercle est alors possible. Elle laisse entre elle et la rainure 53 un bossage 55 de faible largeur, faisant obstacle à l'ouverture non souhaitée du couvercle.

Le coffret 17 reçoit l'un des parafoudres 20 à connecter en parallèle sur la ligne à protéger. Il est reçu dans le compartiment correspondant 44 du chargeur et contribue au guidage et au montage de la barrette de protection sur le bloc de connexion.

Les coffrets 17 sont constitués chacun par deux demi-coquilles identiques 60 montées face à face et assemblées l'une contre l'autre. Les deux demi coquilles enferment entre elles le parafoudre 20 et protègent ses pattes de ligne 23 et sa patte de masse 21.

Chaque demi coquille 60 (figures 11, 14 et 15) est divisée en deux partie 62 et 63 par une nervure ou toile de séparation intérieure 64. La partie 62 dite avant des deux demi coquilles assemblées définit le logement du parafoudre et la partie arrière 63 le logement de ses pattes de contact. Le logement avant 62 est entièrement fermé, à l'exception de trois rainures 65 de communication qu'il présente avec le logement arrière 63.

Ce logement arrière 63 est ouvert sur la face arrière du coffret et constitue une cheminée pour les trois pattes de contact du parafoudre. La partie arrière de ce coffret est donc appelée cheminée.

Les trois rainures 65 sont formées dans le bord de toile 64 de chaque demi- coquille et sont de faible profondeur. Elles reçoivent et maintiennent les trois pattes de contact qui sont largement saillantes dans leur cheminée 63.

Sur le coffret 17 ou chacune de ses deux demi- coquilles 60, un épaulement extérieur 66, sensiblement entre les parois du logement 62 et celles de la cheminée 63, définit une butée d'appui du coffret sur le fond de l'un des compartiments 44 du chargeur. La cheminée 63 est saillante sur l'arrière du chargeur à travers la fenêtre 42 de son fond. Un épaulement intérieur 67 dans la cheminée 63 est prévu à proximité de la toile 64. Il constitue une butée sur le bout de la cheminée 3 qui reçoit une protection, la cheminée 63 s'encastrant sur la périphérie de cette cheminée 3 avec ses pattes de contact intérieures alors raccordées aux éléments de connexion dans cette cheminée 3.

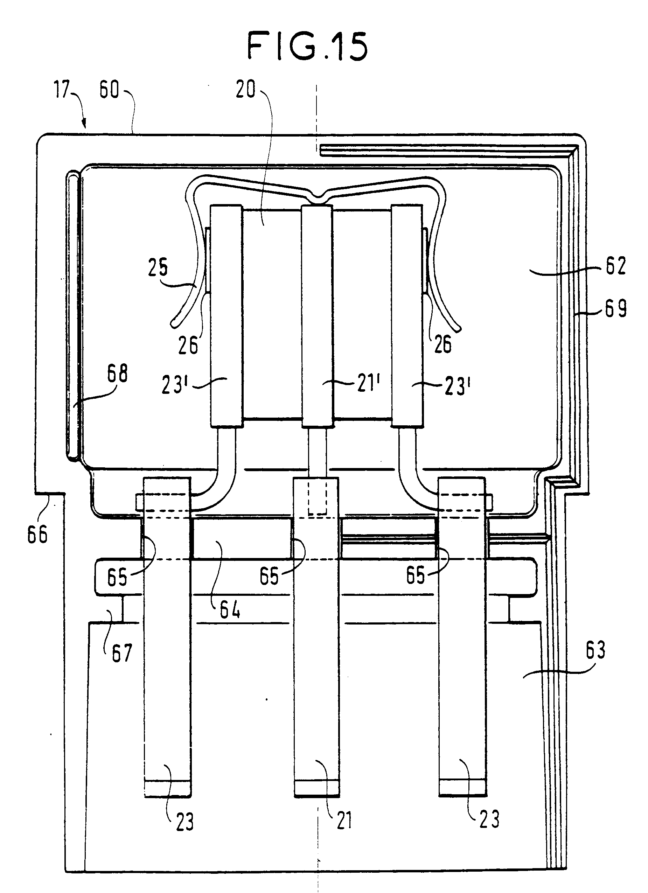

L'assemblage des deux demi-coquilles 60 pour former le coffret renfermant le parafoudre est précisé en regard de la figure 15. On prévoit avantageusement sur l'un des bords de l'ouverture du logement 62 de chaque demi-coquille 60, un volet 68 saillant et prolongeant la face intérieure de cette paroi. Ce volet vient s'encastrer contre la face intérieure de la paroi opposée l'autre demi-coquille assemblée sur celle considérée. On prévoit en outre, sur la demi-périphérie sans ce volet 68 de l'ouverture de chaque demi-coquille et sur la moitié attenante de la toile 64, une fine nervure en V 69, venant en appui sur la demi-périphérie sans cette fine nervure de l'autre demi-coquille assemblée sur celle considérée, et permettant leur soudage aisé, par exemple par ultra-sons.

La figure 15 montre également le parafoudre 20 monté dans l'une des demi-coquilles 60 du coffret avant fermeture du coffret. Ce parafoudre est choisi de préférence de type tripolaire et est en tant que tel connu. On y a simplement illustré ses deux pattes de ligne 23 et sa patte de masse 21 reliées à ses trois électrodes notées 23′ et 21′ en correspondance. Sur ces trois électrodes est monté intérieurement un anneau de court-circuit 25. Cet anneau 25 est en contact direct avec l'électrode de masse 21′. Il est par contre isolé de l'une et l'autre des électrodes de ligne 23′ par une pastille de fusion 26. Cette pastille 26 fond et n'assure plus l'isolation entre l'anneau 25 et les électrodes ou les pattes de ligne, à partir d'une valeur préétablie de surtension sur la ligne correspondante définie par la paire de conducteurs entrants et de conducteurs sortants sur le bloc de connexion, qui est ainsi protégée par mise à la masse de la ligne. Bien entendu le parafoudre peut comporter d'autres dispositions équivalentes pour la fonction de protection de ligne qu'il assure.

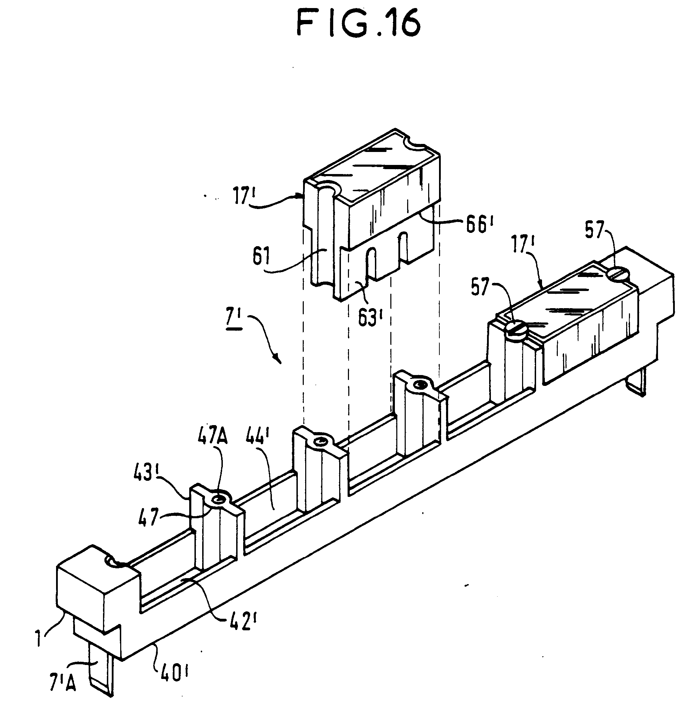

La figure 16 montre très schématiquement une variante de réalisation de la barrette de protection précitée. La barrette selon cette variante est désignée par la référence globale 7′.

Cette barrette de protection 7′ comporte un chargeur 40′ recevant un ou une pluralité de coffrets 17′ contenant chacun un parafoudre non visible mais analogue au parafoudre décrit ci-avant.

Seules les différences essentielles de ce chargeur 40′ et de ce coffret 17′ sont précisées par rapport au chargeur 7 et au coffret 17 décrits ci-avant, leurs parties comparables inchangées ou adpatées étant désignées sous les mêmes références numériques affectés du signe "prime" dans cette figure 16.

Les cloisons transversales 43′ qui séparent les compartiments 44′ le long de chargeur 40′ et les deux petites faces latérales du chargeur sont largement saillantes sur ses grandes faces longitudinales. En outre les fenêtres 42′ dans le fond des compartiments occupent la totalité du fond. Les cloisons transversales 43′ ont une partie centrale renflée formant une nervure circulaire 47 sur leur hauteur, à passage intérieur cylindrique 47A recevant une vis quart de tour 57.

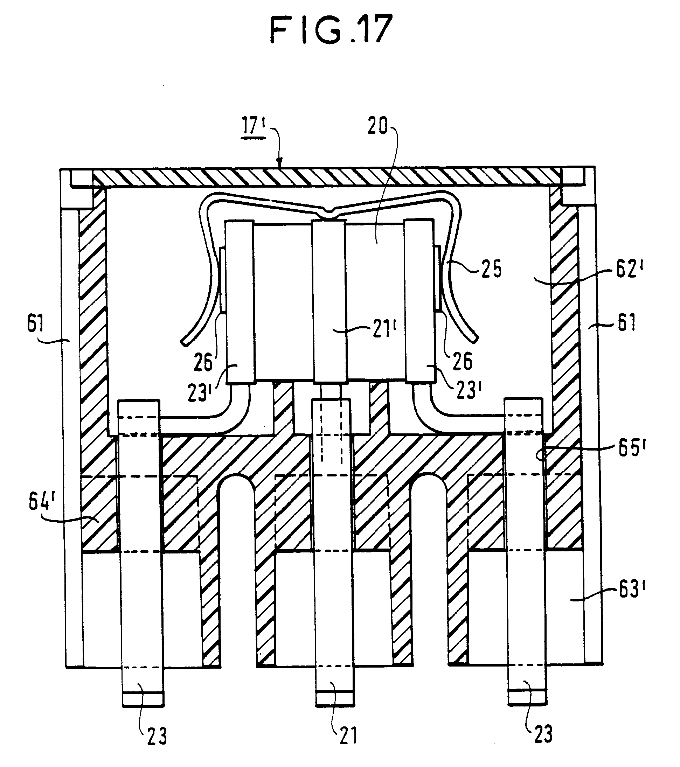

Le coffret 17′ de parafoudre est décrit en se référant aux figures 16 et 17. Il est formé par un bloc dans lequel sont définis le logement avant 62′ pour le parafoudre 20 et trois logements alignés ou cheminées arrière 63′ pour chacune des deux pattes de ligne 23 et la patte de masse 21 du parafoudre. Ces logements 62′ et 63′ sont séparées par une toile intérieure 64′ à passages 65′ pour les trois pattes de contact.

Le logement avant 62′ initialement ouvert à l'opposé de la toile 64′ est fermé par une plaquette non référencée rapportée sur son ouverture. Les trois cheminées arrière sont ouvertes.

Ce coffret présente sur ses petites faces latérales deux empreintes semi-circulaires 61 s'encastrant sur la demi nervure circulaire 47 saillante dans chaque compartiment 44′. Il a un épaulement extérieur 66′ sur ses grandes faces latérales formant butée sur les bords des parois longitudinales de chaque butée sur les bords des parois longitudinales de chaque compartiment 44′. Son blocage dans l'un des compartiments est assurée par la vis 57 dont la tête est bloquée en bout de la nervure 47 et sur le coffret 17′ et l'extrémité bloquée sur le bord d'ouverture de la cheminée latérale voisine 63′.

Ces trois cheminées 63′ s'encastrent dans l'un des cheminées de la rangée centrale du bloc.

En variante non illustrée, ces cheminées centrales 3 peuvent être divisées sur leur hauteur totale chacune en trois cheminées indépendantes pour les deux éléments de connexion latéraux 13 et l'élément de masse 11, qui sont individuellement coiffés par les cheminées 63′.

En variante également non illustrée ces trois cheminées indépendantes 63′ peuvent être remplacées par une cheminée unique venant coiffer la cheminée 3 correspondante du bloc de connexion.

La présente invention a été décrite en regard des exemples de réalisation illustrés et des variantes suggérées. Il est évident que l'on peut apporter d'autres adaptations à la portée de l'homme de l'art dans cette réglette sans modifier les fonctions de protection ainsi intégrées dans la réglette, sélectivement pour les seules lignes souhaitées. En particulier, les cheminées 3 peuvent ne pas constituer la rangée centrale précitée mais constituer l'une des deux rangées latérales, cette dernière devant alors centrale. Dans cette variante indépendamment des dispositions relatives des trois rangées de cheminées sur la face avant du bloc, ces cheminées restent équipées pareillement. On note simplement que les dispositions relatives des trois branches de l'élément de contact 10 (figure 5) ou 10′ (figure 8) sont modifiées en conséquence, pour cette variante.

## Revendications

1. Réglette de raccordement à protections semi-intégrées, pour lignes de transmission définies par des paires de conducteurs entrants raccordées à des paires de conducteurs sortants, comportant :
- un bloc de connexion (1),
- une première (2) et une deuxième (4) rangée d'éléments de connexion montés dans ledit bloc de connexion et affectés auxdits conducteurs entrants et auxdits conducteurs sortants, selon la rangée considérée, avec les éléments de connexion de même rang dans lesdites première et deuxième rangées raccordés l'un à l'autre dans ledit bloc de connexion et accessibles sur une face dite frontale dudit bloc de connexion,
- une barette de protection (7) rapportée contre la face frontale du bloc de connexion et portant des éléments individuels (20) de protection, dits parafoudres, pour lesdites lignes,
- une troisième rangée (3) d'éléments de connexion montés dans ledit bloc de connexion (1) et affectés au raccordement des parafoudres en parallèle sur lesdites lignes, avec les éléments de connexion (13) de ladite troisième rangée raccordés individuellement, au moins pour une partie d'entre eux, dans le bloc de connexion aux éléments de connexion desdites première et deuxième rangées (12, 14) et accessibles sur ladite face frontale du bloc de connexion,
- et une quatrième rangée d'éléments de connexion (23, 21), accessibles sur une face dite arrière de ladite barrette (7) et raccordés individuellement dans ladite barrette au moins à des électrodes dites de ligne des parafoudres, les éléments de connexion de ladite quatrième rangée venant directement se raccorder aux éléments de connexion de ladite troisième rangée, caractérisée en ce que lesdites troisième et quatrième rangées comportent l'une et l'autre des éléments de connexion de masse (11, 21), avec les éléments de connexion de masse de ladite quatrième rangée (21) raccordés à des électrodes dites de masse des différents parafoudres individuels (20), dans ladite barrette de protection (7, 7′), et les éléments de connexion de masse de ladite troisième rangée (11) montés, en outre, saillants sur la face arrière opposée à ladite face frontale dudit bloc de connexion (1) et raccordés à un moyen arrière (8) de distribution de masse commune.

2. Réglette selon la revendication 1, caractérisée en ce que ladite barrette de protection (7, 7′) comporte un chargeur (40, 40′), de longueur sensiblement égale à celle dudit bloc de connexion (1) considéré selon lesdites rangées, présentant d'une part une série de cloisons transversales (43, 43′) entre lesquelles est définie une série de compartiments (44, 44′) pour lesdits parafoudres et d'autre part des moyens de retenue ( 50, 47A) desdits parafoudres, montés sur sa longueur sur l'une des faces dite avant du chargeur et de la barrette résultante, lesdits compartiments étant à fond, à l'opposé de la face avant dudit chargeur et de ladite barrette, constituant ladite face arrière de la barrette.

3. Réglette selon la revendication 2, caractérisée en ce que lesdits moyens de retenue comportent un couvercle (50) monté sur la face avant dudit chargeur, pour la fermeture à l'avant desdits compartiments (44).

4. Réglette selon la revendication 3, caractérisée en ce que lesdits bords longitudinaux dudit chargeur (40), sur ladite face avant, forment une paire de glissières (45) recevant ledit couvercle (50).

5. Réglette selon la revendication 4, caractérisée en ce que les glissières (45) sont en U, avec leur branche extérieure crenelée, à encoches (45A) et dents (45B) alternées, et ledit couvercle (50) a ses bords longitudinaux à dents (51) saillantes et complémentaires desdites encoches (45A) des glissières, pour une course limitée du couvercle sur ledit chargeur lors du montage ou retrait desdits parafoudres.

6. Réglette selon la revendication 5, caractérisée en ce que ladite course limitée est de longueur inférieure à celle de l'un des compartiments (44).

7. Réglette selon l'une des revendications 3 à 6, caractérisée en ce que ledit couvercle (50) présente une rainure transversale (53) à l'une de ses extrémités de sa face intérieure pour le couvercle considéré sur ledit chargeur, et le chargeur (40) une nervure complémentaire (46) sur l'un de ses bords latéraux de sa face avant.

8. Réglette selon la revendication 7, caractérisée en ce que ledit couvercle (50) présente en outre une empreinte en creux (54) dans sa face intérieure, quasi-attenante à ladite rainure transversale (53) en définissant entre elles un bossage (55) formant obstacle au coulissement du couvercle.

9. Réglette selon la revendication 2, caractérisée en ce que lesdits moyens de retenue comportent, des vis quart de tour (57) reçues sur ladite face avant du chargeur dans lesdites cloisons transversales (43′) et bloquant chaque parafoudre sur les bords avant et le fond de son compartiment (44′).

10. Réglette selon l'une des revendications 2 à 11, caractérisée en ce que lesdits parafoudres (20) sont montés en coffret individuel (17, 17′) de protection, dans lequel est enfermé chaque parafoudre, en ne laissant accessibles que des pattes de contact (23, 21) à ce parafoudre, lesdites pattes de contact à chaque parafoudre étant raccordées à l'intérieur du coffret aux électrodes de ligne et de masse du parafoudre et formant la quatrième rangée d'éléments de connexion quand le parafoudre dans ledit coffret est monté et retenu dans ledit chargeur.

11. Réglette selon la revendication 10, caractérisée en ce que ledit coffret comporte une toile intérieure (64, 64′) définissant intérieurement, de part et d'autre d'elle, un premier logement fermé (62, 62′) pour ledit parafoudre proprement dit et un deuxième logement (63, 63′) ouvert à l'opposé de ladite toile pour lesdites pattes de contact (23, 21) à ce parafoudre, lesdits logements communiquant par des rainures (65, 65′) dans la toile.

12. Réglette selon la revendication 11, caractérisée en ce que ledit deuxième logement (63′) est divisé en logements individuels pour lesdites pattes de contact (23, 21).

13. Réglette selon l'une des revendications 11 et 12, caractérisée en ce que ledit coffret (17, 17′) présente des épaulements extérieurs (66, 66′) sensiblement au niveau de ladite toile, constituant des butées de positionnement du parafoudre en coffret dans l'un des compartiments (44, 44′) dudit chargeur (40, 40′).

14. Réglette selon l'un des revendications 11 à 13,caractérisée en ce que ledit coffret (17) est constitué par deux demi coquilles moulées (60), identiques et assemblées face à face l'une à l'autre.

15. Réglette selon la revendication 14, caractérisée en ce que les demi coquilles (60) présentent des moyens de centrage (68) de l'une sur l'autre.

16. Réglette selon l'une des revendications 2 à 15, caractérisée en ce que ledit bloc de connexion (1) présente trois rangées de cheminées (2, 3, 4) saillantes sur ladite face frontale et affectées individuellement aux éléments de connexion des première, deuxième et troisième rangées d'éléments de connexion, les rangées de cheminées étant dites comparativement première, deuxième et troisième rangées de cheminées.

17. Réglette selon la revendication 16, caractérisée en ce que lesdits parafoudres sont de type tripolaire, pour chacun desquels deux pattes de contact sont dites de ligne (23) et de part et d'autre de la troisième patte de contact dite de masse (21), et chaque cheminée (3) de la troisième rangée de cheminées présente trois canaux internes (33, 31) sur au moins une partie de sa hauteur, pour trois éléments de connexion successifs de ladite troisième rangée, dits éléments de connexion de ligne (13) pour deux d'entre d'eux et dit élément de masse (11) pour le troisième, entre les deux éléments de connexion de ligne.

18. Réglette selon la revendication 17, caractérisée en ce que les éléments de connexion ayant un même rang dans l'une et l'autre des première et deuxième rangées d'éléments de connexion et l'un des éléments de connexion de ligne de ladite troisième rangée sont raccordés directement par un pont de liaison (10A) en formant ensemble un même élément de contact (10, 10′), ledit pont de liaison (10A) s'étendant transversalement sur la face arrière dudit bloc de connexion.

19. Réglette selon la revendication 18, caractérisée en ce que ledit élément de masse (11) dans chaque cheminée (4) de la troisième rangée de cheminée présente une queue de connexion (11A) saillante sur la face arrière dudit bloc de connexion (1) et constituant un frotteur de contact sur ledit moyen arrière de distribution de masse constitué par un rail support (8) de ladite réglette.

20. Réglette selon la revendication 19, caractérisée en ce que ledit élément de masse (11) et lesdits éléments de connexion ligne (13), dans chaque cheminée (3) de la troisième rangée de cheminées sont chacun à deux branches élastiques (13B, 11B) présentant un bossage (13C, 11C) saillant sur leurs bords en vis-à-vis et décalé de l'un des bords à l'autre.

21. Réglette selon l'une des revendications 16 à 20, caractérisée en ce que chaque cheminée (3) de la troisième rangée de cheminées présente une ouverture commune (32) pour les parties terminales de ses éléments de connexion raccordées individuellement à ceux correspondants de la quatrième rangée d'éléments de connexion, et des moyens d'étanchéité et d'isolation (34) montés dans ladite ouverture commune.

22. Réglette selon la revendication 21, caractérisée en ce que lesdits moyens d'étanchéité et d'isolation (34) sont constitués par un capuchon alvéolé en plastique.

23. Réglette selon la revendication 21, caractérisée en ce que lesdits moyens d'étanchéité et d'isolation (34) sont constitués par une graisse isolante.

24. Réglette selon l'une des revendications 17 à 24, caractérisée en ce que elle comporte en outre une plaque de retenue (9) des éléments de connexion dans lesdites cheminées, rapportée et fixée de manière étanche sur ladite face arrière du bloc de connexion.

25. Réglette selon l'une des revendication 16 à 25, caractérisée en ce que ledit bloc de connexion (1) comporte deux cheminées supplémentaires (30) sur ladite face frontale, à l'une et l'autre des deux extrémités de la troisième rangée de cheminées (3), respectivement, et en ce que ladite barrette de protection (7) est équipée de deux pattes de montage (7A), formées sur les extrémités dudit chargeur et saillantes sur la face arrière de la barrette, et reçues dans les cheminées supplémentaires (30).

26. Réglette selon l'une des revendications 1 à 25, caractérisée en ce qu'elle comporte des pattes d'accrochage (1A) formées sur ledit bloc de connexion (1) et saillantes sur sa face arrière, présentant une excroissance latérale percée d'un fenêtre (1F) et cune dent terminale arrière (1D).

27. Réglette selon l'une des revendications 1 à 26, caractérisée en ce que ladite troisième rangée d'éléments de connexion est située entre lesdites première et deuxième rangées d'éléments de connexion et est sensiblement centrale, lesdites rangées de cheminées étant séparées par deux gorges (38) dans la face frontale dudit bloc de connexion.

28. Réglette selon l'une des revendications 1 à 26, caractérisée en ce que ladite troisième rangée d'éléments de connexion est d'un côté desdites première et deuxième rangées d'éléments de connexion et dite latérale, lesdites rangées de cheminées étant séparées par deux gorges (38) dans la face frontale dudit bloc de connexion.

## Patentansprüche

1. Anschlußleiste mit halbintegrierten Schutzeinrichtungen, zur Verwendung bei Übertragungsleitungen, die durch Paare eintretender Leiter definiert sind, welche an ausgehende Leiterpaare angeschlossen werden,
- mit einem Anschlußblock (1):
- mit einer ersten (2) und einer zweiten Reihe (4) von Anschlußelementen, die im Anschlußblock montiert und den eintretenden Leitern sowie den austretenden Leitern gemäß der entsprechenden Reihe zugeordnet sind, wobei die Anschlußelemente gleichen Ranges in der ersten und in der zweiten Reihe miteinander in dem Anschlußblock verbunden und über eine Vorderseite des Anschlußblockes zugänglich sind;
- mit einer Schutzstange (7), die an die Vorderseite des Anschlußblockes angesetzt ist und einzelne Schutzelemente (20), Blitzableiter genannt, für die Leitungen trägt;
- mit einer dritten Reihe (3) von Anschlußelementen, die im Anschlußblock (1) montiert und dem parallelen Anschluß der Blitzableiter an die Leitungen zugeordnet sind, wobei die Anschlußelemente (13) der dritten Reihe einzeln und mindestens für einen Teil von ihnen im Anschlußblock an die Anschlußelemente der ersten und der zweiten Reihe (12, 14) angeschlossen sind, welche über die Vorderseite des Anschlußblockes zugänglich sind; und
- mit einer vierten Reihe von Anschlußelementen (23, 21), die an einer Rückseite der Stange (7) zugänglich und einzeln in der Stange mindestens an Elektroden angeschlossen sind, Blitzableiterelektroden genannt, wobei die Anschlußelemente der vierten Reihe direkt an die Anschlußelemente der dritten Reihe angeschlossen sind, dadurch gekennzeichnet, daß sowohl die dritte als auch die vierte Reihe Masseanschlußelemente (11, 21) umfassen, wobei die Masseanschlußelemente der vierten Reihe (21) an Masseelektroden der verschiedenen Blitzableiter (20) in der Schutzstange (7, 7′) angeschlossen sind, während die Masseanschlußelemente der dritten Reihe (11), die auf der der Vorderseite des Anschlußblockes (1) entgegengesetzten Rückseite vorragen, weiter an ein gemeinsames hinteres Masseverteilungsmittel (8) angeschlossen sind.

2. Leiste nach Anspruch 1, dadurch gekennzeichnet, daß die Schutzstange (7, 7′) eine Ladeeinrichtung (40, 40′) enthält, deren Länge im wesentlichen derjenigen des Anschlußblockes (1) entlang der Reihen entspricht und einerseits eine Reihe von Quertrennwänden (43, 43′), zwischen denen eine Reihe von Fächern (44, 44′) für die Blitzableiter definiert sind, und andererseits Mittel (50, 47A) zur Halterung der Blitzableiter aufweist, die über die Länge der Stange auf der Vorderseite der Ladeeinrichtung und der sich ergebenden Stange montiert sind, wobei die Fächer an der der Vorderseite der Ladeeinrichtung und der Stange entgegengesetzten Seite einen Boden besitzen, der die Rückseite der Stange bildet.

3. Leiste nach Anspruch 2, dadurch gekennzeichnet, daß die Haltemittel einen Deckel (50) aufweisen, der auf der Vorderseite der Ladeeinrichtung zum Verschließen vor den Fächern (44) montiert ist.

4. Leiste nach Anspruch 3, dadurch gekennzeichnet, daß die Längsränder der Ladeeinrichtung (40) auf der Vorderseite ein Paar von Laufschienen (45) bilden, die den Deckel (50) aufnehmen.

5. Leiste nach Anspruch 4, dadurch gekennzeichnet, daß die Gleitschienen (45) U-förmig ausgebildet sind, wobei ihr äußerer Schenkel durch abwechselnde Einschnitte (45A) und Zähne (45B) gezackt ist und wobei der Deckel (50) an seinen Längsrändern mit Zähnen (51) versehen ist, die vorspringen und den Ausschnitten (45A) der Gleitschienen komplementär sind, und zwar für einen begrenzten Gleitweg des Deckels auf der Ladeeinrichtung während der Montage oder Demontage der Blitzableiter.

6. Leiste nach Anspruch 5, dadurch gekennzeichnet, daß der begrenzte Gleitweg kürzer ist als die Länge eines der Fächer (44).

7. Leiste nach einem der Ansprüche 3 bis 6, dadurch gekennzeichnet, daß der Deckel (50) eine Querrinne (53) an einem seiner Enden der Innenfläche für den Deckel aufweist, wenn er sich auf der Ladeeinrichtung befindet, und daß die Ladeeinrichtung (40) eine komplementäre Rippe (46) auf einem der seitlichen Ränder ihrer Vorderfläche aufweist.

8. Leiste nach Anspruch 7, dadurch gekennzeichnet, daß der Deckel (50) weiter eine Vertiefung (54) in seiner Innenfläche aufweist, die praktisch an die Querrinne (53) angrenzt und zwischen diesen einen Wulst (55) definiert, der ein Hindernis gegen das Gleiten des Deckels bildet.

9. Leiste nach Anspruch 2, dadurch gekennzeichnet, daß die Haltemittel Viertelumdrehungsschrauben (57) aufweisen, die auf der Vorderseite der Ladeeinrichtung in den Quertrennwänden (43′) sitzen und jeden Blitzableiter auf den vorderen Rändern und am Boden seines Faches (44′) blockieren.

10. Leiste nach einem der Ansprüche 2 bis 11, dadurch gekennzeichnet, daß die Blitzableiter (20) in einzelnen Kästen (17, 17′) montiert sind, in denen jeder Blitzableiter so eingeschlossen ist, daß er nur die Kontaktfahnen (23, 21) des betreffenden Blitzableiters zugänglich läßt, wobei die Kontaktfahnen jedes Blitzableiters im Inneren des Kastens an die Leitungs- und Masseelektroden des Blitzableiters angeschlossen sind und die vierte Reihe der Anschlußelemente bilden, wenn der Blitzableiter in dem betreffenden Kasten montiert und in der Ladeeinrichtung montiert ist.

11. Leiste nach Anspruch 10, dadurch gekennzeichnet, daß der Kasten eine Zwischenwand (64, 64′) aufweist, die im Inneren an ihren beiden Seiten eine erste, geschlossene Aufnahmekammer (62, 62′) für den eigentlichen Blitzableiter und eine zweite, offene Kammer (63, 63′) gegenüber der Zwischenwand für die Kontaktfahnen (23, 21) des Blitzableiters definiert, wobei die Aufnahmekammern miteinander durch Kanäle (65, 65′) in der Zwischenwand in Verbindung stehen.

12. Leiste nach Anspruch 11, dadurch gekennzeichnet, daß die zweite Aufnahmekammer (60′) in einzelne Längskammern für die Kontaktfahnen (23, 21) unterteilt ist.

13. Leiste nach Anspruch 11 oder 12, dadurch gekennzeichnet, daß der Kasten (17, 17′) eine äußere Schulter (66, 66′) in wesentlichen in Höhe der Zwischenwand aufweist, die Positionierungsanschläge des im Kasten in einem der Fächer (44, 44′) der Ladeeinrichtung (40, 40′) befindlichen Blitzableiters bilden.

14. Leiste nach einem der Ansprüche 11 bis 13, dadurch gekennzeichnet, daß der Kasten (17) aus zwei gegossenen Halbschalen (60) besteht, die identisch sind und einander zugekehrt aneinandergesetzt sind.

15. Leiste nach Anspruch 14, dadurch gekennzeichnet, daß die beiden Halbschalen (60) Mittel (68) zum gegenseitigen Zentrieren aufweisen.

16. Leiste nach einem der Ansprüche 2 bis 15, dadurch gekennzeichnet, daß der Anschlußblock (1) drei Reihen von Schächten (2, 3, 4) aufweist, die über die Vorderseite vorstehen und je den Anschlußelementen der ersten, zweiten und dritten Reihe von Anschlußelementen zugeordnet sind, wobei die Schachtreihen im Vergleich als erste, zweite und dritte Schachtreihen bezeichnet werden.

17. Leiste nach Anspruch 16, dadurch gekennzeichnet, daß die Blitzableiter dreipolig ausgebildet sind, wobei für jeden von ihnen zwei Kontaktfahnen, Leitungsfahnen (23) genannt, zu beiden Seiten der dritten Kontaktfahne angeordnet sind, Massenfahne (21) genannt, und wobei jeder Schacht (3) der dritten Reihe der Schächte drei innere Kanäle (33, 31) auf mindestens einem Abschnitt seiner Höhe für drei aufeinanderfolgende Anschlußelemente der dritten Reihe aufweist, die Leitungsanschlußelemente (13) für zwei von ihnen und Masseelement (11) für das dritte Anschlußelement zwischen den beiden Leitungsanschlußelementen genannt werden.

18. Anschluß nach Leiste 17, dadurch gekennzeichnet, daß die Anschlußelemente, die den gleichen Rang in der ersten und der zweiten Reihe der Anschlußelemente haben, und eines der Leitungsanschlußelemente der dritten Reihe direkt durch eine Verbindungsbrücke (10A) unter Bildung eines gemeinsamen Kontaktelementes (10, 10′) verbunden sind, wobei sich die Verbindungsbrücke (10A) quer über die Rückseite des Anschlußblockes erstreckt.

19. Leiste nach Anspruch 18, dadurch gekennzeichnet, daß das Masseelement (11) in jedem Schacht (4) der dritten Schachtreihe ein Anschlußendstück (11A) aufweist, das über die Rückseite des Anschlußblockes (1) vorsteht und einen Reibkontakt auf dem hinteren Mittel zur Massenverteilung bildet, das aus einer Tragschiene (8) der Leiste besteht.

20. Leiste nach Anspruch 19, dadurch gekennzeichnet, daß das Masseelement (11) und die Leitungsanschlußelemente (13) in jedem Schacht (3) der dritten Schachtreihe jeweils zwei elastische Schenkel (13B, 11B) besitzen, die einen Höcker (13C, 11C) aufweisen, welcher auf deren Rändern einander gegenüberliegend, aber von einem der Ränder zum anderen gegeneinander versetzt vorstehen.

21. Leiste nach einem der Ansprüche 16 bis 20, dadurch gekennzeichnet, daß jeder Schacht (3) der dritten Schachtreihe eine gemeinsame Öffnung (32) für die Endabschnitte seiner Anschlußelemente aufweist, die einzeln denen der vierten Reihe der Anschlußelemente entsprechen und daß sie Abdichtungs- und Isolationsmittel (34) aufweist, die in der gemeinsamen Öffnung montiert sind.

22. Leiste nach Anspruch 21, dadurch gekennzeichnet, daß die Abdichtungs- und Isolationsmittel (34) aus einem Deckel aus Kunststoff mit Wabenstruktur bestehen.

23. Leiste nach Anspruch 21, dadurch gekennzeichnet, daß die Abdichtungs- und Isolationsmittel (34) aus einem isolierenden Fett bestehen.

24. Leiste nach einem der Ansprüche 17 bis 24, dadurch gekennzeichnet, daß sie weiter einen Platte (9) zum Halten der Anschlußelemente in den Schächten aufweist, wobei die Platte dicht auf der Rückseite des Anschlußblockes angesetzt und befestigt ist.

25. Leiste nach einem der Ansprüche 16 bis 25, dadurch gekennzeichnet, daß der Anschlußblock (1) zwei zusätzliche Schächte (30) auf der Vorderseite jeweils an einem der beiden Enden der dritten Schachtreihe (3) aufweist und daß die Schutzstange (7) mit zwei Montageklauen (7A) versehen ist, die auf den Enden der Ladeeinrichtung ausgebildet sind und auf die Rückseite der Stange vorstehen, und die in den zusätzlichen Schächten (30) aufgenommen werden.

26. Leiste nach einem der Ansprüche 1 bis 25, dadurch gekennzeichnet, daß sie Klauen (1A) aufweist, die auf dem Anschlußblock (1) ausgebildet sind und auf seiner Rückfläche vorstehen, wobei die Klauen eine seitliche Abkröpfung, die von einem Fenster (1F) durchdrungen wird, und einen hinteren Endzahn (1D) aufweisen.

27. Leiste nach einem der Ansprüche 1 bis 26, dadurch gekennzeichnet, daß die dritte Reihe von Anschlußelementen zwischen der ersten und der zweiten Reihe von Anschlußelementen und im wesentlichen zentral angeordnet ist, wobei die Schachtreihen durch zwei Rinnen (38) in der Vorderseite des Anschlußblockes getrennt sind.

28. Leiste nach einem der Ansprüche 1 bis 26, dadurch gekennzeichnet, daß die dritte Reihe von Anschlußelementen sich auf einer Seite der ersten und der zweiten Reihe von Anschlußelementen befindet und Seitenreihe genannt wird, wobei die Schachtreihen durch zwei Rinnen (38) in der Vorderseite des Anschlußblockes getrennt sind.

## Claims

1. A connection strip having semi-integrated protectors for transmission lines defined by pairs of incoming conductors connected to pairs of outgoing conductors, the strip comprising:
a tag block (1);
a first row (2) and a second row (4) of tags mounted in said tag block and attributed to said incoming conductors and to said outgoing conductors, depending on the row under consideration, with corresponding tags in said first and second rows being connected to each other inside said tag block and being accessible from a "front" face of said tag block;
a protection strip (7) fitted to the front face of the tag block and carrying individual protectors (20) for said lines referred to as "lightning arresters";
a third row (3) of tags mounted in said tag block (1) being attributed to connecting the lightning arresters in parallel with said lines, with at least some of the tags (13) of said third row being individually connected within the tag block to corresponding tags of said first and second rows (12, 14) and being accessible from said front face of the tag block; and
a fourth row of tags (23, 21) accessible on a "back" face of said protection strip (7) and individually connected in said protection strip at least to the "line" electrodes of the lightning arresters, the tags of said fourth row connecting directly to the tags of said third row;
the connection strip being characterized in that said third and fourth rows both include ground tags (11, 21), with the ground tags of said fourth row (21) being connected to "ground" electrodes of respective individual lightning arresters (20) within said protection strip (7, 7′), and the ground tags of said third row (11) being additionally mounted to project from the back face opposite to said front face of said tag block (1) and being connected to back means (8) for distributing a common ground.

2. A strip according to claim 1, characterized in that said protection strip (7, 7′) comprises a charger (40, 40′) of substantially the same length as said tag block (1) in the long direction of said rows, the protection strip having firstly a series of transverse partitions (43, 43′) between which a series of compartments (44, 44′) are defined for said lightning arresters, and secondly retaining means (50, 47A) for said lightning arresters mounted along the length of one of the "front" faces of the charger and of the resulting strip, said components having respective bottoms opposite to the front face of said charger and of said strip and constituting said back face of the protection strip.

3. A strip according to claim 2, characterized in that said retaining means comprise a lid (50) mounted on the front face of said charger for closing the fronts of said compartments (44).

4. A strip according to claim 3, characterized in that the longitudinal edges on the front face of said charger (40) constitute a pair of slideways (45) receiving said lid (50).

5. A strip according to claim 4, characterized in that the slideways (45) are channel section slideways, having crenelated outer flanges with alternating notches (45A) and teeth (45B), and said lid (50) has longitudinal edges with projecting teeth (51) that are complementary to said notches (45A) of the slideways, thereby making it possible to use a limited stroke for said lid on said charger when installing or removing said lightning arresters.

6. A strip according to claim 5, characterized in that said limited stroke is shorter than the length of one of the compartments (44).

7. A strip according to any one of claims 3 to 6, characterized in that said lid (50) has a transverse groove (53) at one of the ends of its inside face when the lid is on said charger, and the charger (40) has a complementary rib (46) on one of the ends of its front face.

8. A strip according to claim 7, characterized in that said lid (50) further includes a dent (54) in its inside face, almost adjacent to said transverse groove (53) defining therebetween a bulge (55) constituting an obstacle to sliding off the lid.

9. A strip according to claim 2, characterized in that said retaining means comprise a quarter-turn screw (57) received in said front face of the charger in said transverse partitions (43′) and holding each lightning arrester on the front edges and on the bottom of the corresponding compartment (44′).

10. A strip according to any one of claims 2 to 11, characterized in that said lightning arresters (20) are mounted in individual protection boxes (17, 17′), with each lightning arrester being enclosed a corresponding one thereof, leaving only the contact tabs (23, 21) of the lightning arrester accessible, said contact tabs of each arrester being connected inside the box to the line electrodes and the ground electrode of the arrester and forming the fourth row of tags when the arrester in said box is mounted and retained in said charger.

11. A strip according to claim 10, characterized in that said box includes an inside web (64, 64′) internally defining on opposite sides thereof a closed first housing (62, 62′) for said arrester per se, and an open second housing (63, 63′) which opens away from said web for housing said contact tabs (23, 21) of said arrester, said housings intercommunicating via slots (65, 65′) through the web.

12. A strip according to claim 11, characterized in that said second housings (63′) are subdivided into individual housings for each of said contact tabs (23, 21).

13. A strip according to claim 11 or 12, characterized in that said box (17, 17′) has outer shoulders (66, 66′) substantially level with said web and constituting positioning abutments for positioning the arrester in the box within one of the compartments (44, 44′) of said charger (40, 40′).

14. A strip according to any one of claims 11 to 13, characterized in that said box (17) is constituted by two identical molded half-shells (60) which are assembled face to face.

15. A strip according to claim 14, characterized in that the two half-shells (60) include mutual centering means (68).

16. A strip according to any one of claims 2 to 15, characterized in that said tag block (1) has three rows of chimneys (2, 3, 4) projecting from said front face and respectively attributed to the tags of first, second, and third rows of tags, the rows of chimneys being correspondingly referred to as the first, second, and third rows of chimneys.

17. A strip according to claim 16, characterized in that said lightning arresters are of three-pole type, each having two "line" contact tabs (23) on either side of a third "ground" contact tab (21), and each chimney (3) of the third row of chimneys has three internal channels (33, 31) over at least a portion of its height, for receiving three successive tags of said third row, said line tags (13) being received in two of said channels, and a ground tag (11) being received in the third channel between the two line tags.

18. A strip according to claim 17, characterized in that the tags in corresponding positions in the first and second rows of tags, and one of the line tags of said third row are directly interconnected by a connection bridge (10A), thereby together forming a tag component (10, 10′), said connection bridge (10A) extending transversely over the back face of said tag block.

19. A strip according to claim 18, characterized in that said ground tag (11) in each chimney (4) of the third row of chimneys has a connection tail (11A) projecting from the back face of said tag block (1) and making friction contact with said back means for distributing ground that are constituted by a support rail (8) for said strip.

20. A strip according to claim 19, characterized in that said ground tag (11) and said line tags (13) in each chimney (3) of the third row of chimneys, are each constituted by two resilient branches (13B, 11B) having bulges (13C, 11C) projecting from their facing edges and offset from one another along said edges.

21. A strip according to any one of claims 16 to 20, characterized in that each chimney (3) of the third row of chimneys has a common opening (32) for the end portions of the tags that are individually connected to corresponding tags of the fourth row of tags, together with sealing and insulation means (34) mounted in said common opening.

22. A strip according to claim 21, characterized in that said sealing and insulation means (34) are constituted by a plastic cap having cells.

23. A strip according to claim 21, characterized in that said sealing and insulation means (34) are constituted by an insulating grease.

24. A strip according to any one of claims 17 to 23, characterized in that it further includes a retaining plate (9) for retaining the tags in said chimneys, the plate being applied to and fixed on said back face of the tag block in sealed manner.

25. A strip according to any one of claims 16 to 24, characterized in that said tag block (1) includes two additional chimneys (30) on said front face, one at each of the two ends of the third row of chimneys (3), and in that said protection strip (7) is fitted with two assembly tabs (7A) formed on the ends of said charger and projecting from the back face of said protection strip to be received in the additional chimney (30).

26. A strip according to any one of claims 1 to 25, characterized in that it includes retaining tabs (1A) formed on said tag block (1) and projecting from its back face, said tabs having respective lateral projections pierced by windows (1F) and respective back end catches (1D).

27. A strip according to any one of claims 1 to 26, characterized in that said third row of tags is situated between said first and second rows of tags and is substantially central therebetween, said rows of chimneys being separated by two grooves (38) in the front face of said tag block.

28. A strip according to any one of claims 1 to 26, characterized in that said third row of tags is one side of said first and second rows of tags and is referred to as a side row, said rows of chimneys being separated by two grooves (38) in the front face of said tag block.
